# EUROPÄISCHE PATENTSCHRIFT

(11) **EP 3 903 295 B1**
(45) Veröffentlichungstag und Bekanntmachung des Hinweises auf die Patenterteilung: **08.07.2026**
(21) Anmeldenummer: 19817634.9
(22) Anmeldetag: 05.12.2019
(51) Int. Cl.: G08G 1/16, G01S 17/931, G01S 15/931, G08G 1/042, G08G 1/04, G08G 1/01, H04W 4/44, G06V 20/54, G06V 20/58, H04W 4/029, G01S 13/931

(54) **VERFAHREN ZUM ASSISTIEREN EINES KRAFTFAHRZEUGS**
METHOD FOR ASSISTING A MOTOR VEHICLE
PROCÉDÉ D'ASSISTANCE D'UN VÉHICULE À MOTEUR

(30) Priorität: 28.12.2018 DE 102018251778
(43) Veröffentlichungstag der Anmeldung: 03.11.2021
(73) Patentinhaber: Robert Bosch GmbH, 70442 Stuttgart (DE)
(72) Erfinder: NICODEMUS, Rolf, 74321 Bietigheim-Bissingen (DE); NORDBRUCH, Stefan, 70806 Kornwestheim (DE)
(86) Internationale Anmeldenummer: PCT/EP2019/083809
(87) Internationale Veröffentlichungsnummer: WO 2020/135991

(56) Entgegenhaltungen:
- WO-A1-2017/041941
- DE-A1- 102017 202 065
- KR-B1- 101 414 571
- US-A1- 2017 327 035
- US-A1- 2018 365 999

## Beschreibung

Die Erfindung betrifft ein Verfahren zum Assistieren eines Kraftfahrzeugs bei einem zumindest teilautomatisiert geführten Fahrzeug des Kraftfahrzeugs innerhalb einer Verkehrsinfrastuktur. Die Erfindung betrifft ferner eine Vorrichtung, ein Computerprogramm sowie ein maschinenlesbares Speichermedium.

### Stand der Technik

Die Offenlegungsschrift DE 102 10 546 A1 offenbart ein Verfahren und ein System zur automatischen Fahrzeugführung.

Die Offenlegungsschrift WO 2017/041941 A1 offenbart ein Verfahren und eine Vorrichtung zum Betreiben eines innerhalb eines Parkplatzes fahrerlos fahrenden Kraftfahrzeugs.

Die Offenlegungsschrift US 2018/0365999 A1 offenbart ein Verfahren zum Warnen eines Verkehrsteilnehmers vor einer Kollision.

Die Offenlegung DE 10 2017 202065 A1 offenbart ein Verfahren zum Koordinieren eines Verkehrs mehrerer Kraftfahrzeuge innerhalb eines vorbestimmten Infrastrukturbereichs durch eine zentrale Servervorrichtung.

### Offenbarung der Erfindung

Die der Erfindung zugrundeliegende Aufgabe ist darin zu sehen, ein Konzept zum effizienten Assistieren eines Kraftfahrzeugs bei einer zumindest teilautomatisiert geführten Fahrt des Kraftfahrzeugs innerhalb einer Verkehrsinfrastuktur bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Assistieren eines Kraftfahrzeugs bei einer zumindest teilautomatisiert geführten Fahrt des Kraftfahrzeugs innerhalb einer Verkehrsinfrastuktur bereitgestellt, umfassend die folgenden Schritte:
- Empfangen von Bereichssignalen, die einen mittels einer Umfeldsensorik erfassten ersten Bereich der Verkehrsinfrastruktur repräsentieren, wobei die Umfeldsensorik stationär angeordnete Umfeldsensoren umfasst.
- Ermitteln für ein sich dem ersten Bereich zumindest teilautomatisiert geführt näherndes Kraftfahrzeug, ob ein zweiter Bereich, der ein Teilbereich des ersten Bereichs ist, zu einer voraussichtlichen Ankunftszeit des Kraftfahrzeugs am zweiten Bereich frei von einem möglichen Kollisionsobjekt für das Kraftfahrzeug ist, basierend auf den Bereichssignalen,
- bei einem zu der voraussichtlichen Ankunftszeit von einem möglichen Kollisionsobjekt für das Kraftfahrzeug freien zweiten Bereich Ausgeben eines Freigabesignals zum Senden einer Kommunikationsnachricht über ein Kommunikationsnetzwerk an das Kraftfahrzeug, dass der zweite Bereich zu der voraussichtlichen Ankunftszeit frei von einem möglichen Kollisionsobjekt für das Kraftfahrzeug ist, wobei das Ausbleiben einer solchen Kommunikationsnachricht für das Kraftfahrzeug das Signal ist, seine Geschwindigkeit zu verringern oder ganz anzuhalten oder eine Warnung an einen Fahrer des Kraftfahrzeugs auszugeben, sodass dieser wieder vollständig die Kontrolle über das Kraftfahrzeug übernehmen muss,
- wobei das Ermitteln, ob der zweite Bereich zu der voraussichtlichen Ankunftszeit des Kraftfahrzeugs am Bereich frei von einem möglichen Kollisionsobjekt für das Kraftfahrzeug ist, ein Verarbeiten der Bereichssignale umfasst, um ein mögliches Kollisionsobjekt zu detektieren, wobei bei Detektion eines möglichen Kollisionsobjekts eine Bewegung des detektierten möglichen Kollisionsobjekts basierend auf den Bereichssignalen prädiziert wird, um zu ermitteln, ob sich das detektierte mögliche Kollisionsobjekt zu der voraussichtlichen Ankunftszeit noch innerhalb des zweiten Bereichs befinden wird.

Nach einem zweiten Aspekt wird eine Vorrichtung bereitgestellt, die eingerichtet ist, alle Schritte des Verfahrens gemäß dem ersten Aspekt auszuführen.

Nach einem dritten Aspekt wird ein Computerprogramm bereitgestellt, welches Befehle umfasst, die bei Ausführung des Computerprogramms durch einen Computer, beispielsweise durch die Vorrichtung gemäß dem zweiten Aspekt, diesen veranlassen, ein Verfahren gemäß dem ersten Aspekt auszuführen.

Nach einem vierten Aspekt wird ein maschinenlesbares Speichermedium bereitgestellt, auf dem das Computerprogramm nach dem dritten Aspekt gespeichert ist.

Die Erfindung basiert auf der Erkenntnis, dass die obige Aufgabe dadurch gelöst werden kann, dass ein Bereich einer Verkehrsinfrastuktur mittels einer Umfeldsensorik überwacht wird, wobei basierend auf der Überwachung ermittelt wird, ob der Bereich frei von einem möglichen Kollisionsobjekt für ein sich dem Bereich näherndes Kraftfahrzeug ist zu einem Zeitpunkt einer voraussichtlichen Ankunftszeit des Kraftfahrzeugs am Bereich. Wenn zur voraussichtlichen Ankunftszeit der Bereich frei von einem möglichen Kollisionsobjekt ist, wird dies dem Kraftfahrzeug mitgeteilt. Das heißt also, dass das Kraftfahrzeug in einem solchen Fall die Information erhält, dass der Bereich frei von einem möglichen Kollisionsobjekt für das Kraftfahrzeug zur voraussichtlichen Ankunftszeit sein wird. Basierend auf dieser Information kann dann das Kraftfahrzeug effizient zumindest teilautomatisiert geführt werden.

Sofern beispielsweise das zumindest teilautomatisiert geführte Kraftfahrzeug nicht die Information erhält, dass der Bereich der Verkehrsinfrastuktur zur voraussichtlichen Ankunftszeit frei von einem möglichen Kollisionsobjekt ist, kann auch hier basierend auf dem Fehlen dieser Information das Kraftfahrzeug effizient zumindest teilautomatisiert geführt werden. Beispielsweise kann vorgesehen sein, dass das Kraftfahrzeug zumindest teilautomatisiert seine Geschwindigkeit verringert beziehungsweise sogar ganz anhält.

Somit wird also insbesondere der technische Vorteil bewirkt, dass ein Kraftfahrzeug bei einer zumindest teilautomatisiert geführten Fahrt innerhalb einer Verkehrsinfrastuktur effizient assistiert werden kann.

Die Formulierung "zumindest teilautomatisiertes Steuern bzw. Führen" umfasst die folgenden Fälle: Teilautomatisiertes Steuern bzw. Führen, hochautomatisiertes Steuern bzw. Führen, vollautomatisiertes Steuern bzw. Führen, fahrerloses Steuern bzw. Führen, Fernsteuern des Kraftfahrzeugs.

Teilautomatisiertes Steuern bzw. Führen bedeutet, dass in einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss aber das automatische Steuern der Längs- und Querführung dauerhaft überwachen, um bei Bedarf manuell eingreifen zu können.

Hochautomatisiertes Steuern bzw. Führen bedeutet, dass in einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben. Der Fahrer muss also potenziell in der Lage sein, dass Steuern der Längs- und Querführung zu übernehmen.

Vollautomatisiertes Steuern bzw. Führen bedeutet, dass in einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. In dem spezifischen Anwendungsfall ist der Fahrer nicht erforderlich.

Fahrerloses Steuern bzw. Führen bedeutet, dass unabhängig von einem spezifischen Anwendungsfall (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. Die Längs- und Querführung des Fahrzeugs werden somit zum Beispiel bei allen Straßentypen, Geschwindigkeitsbereichen und Umweltbedingungen automatisch gesteuert. Die vollständige Fahraufgabe des Fahrers wird somit automatisch übernommen. Der Fahrer ist somit nicht mehr erforderlich. Das Kraftfahrzeug kann also auch ohne Fahrer von einer beliebigen Startposition zu einer beliebigen Zielposition fahren. Potentielle Probleme werden automatisch gelöst, also ohne Hilfe des Fahrers.

Ein Fernsteuern des Kraftfahrzeugs bedeutet, dass eine Quer- und Längsführung des Kraftfahrzeugs ferngesteuert werden. Das heißt beispielsweise, dass Fernsteuerungssignale zum Fernsteuern der Quer- und Längsführung an das Kraftfahrzeug gesendet werden. Das Fernsteuern wird zum Beispiel mittels einer entfernten Fernsteuerungseinrichtung durchgeführt.

Eine Verkehrsinfrastruktur im Sinne der Beschreibung umfasst beispielsweise eine oder mehrere Straßen, allgemein Verkehrswege. Eine Verkehrsinfrastruktur im Sinne der Beschreibung umfasst beispielsweise einen oder mehrere Verkehrsknotenpunkte beziehungsweise einen oder mehrere Straßenknotenpunkte.

Ein Bereich im Sinne der Beschreibung ist beispielsweise ein Verkehrsknotenpunkt beziehungsweise ein Straßenknotenpunkt. Ein Straßenknotenpunkt ist beispielsweise eine Kreuzung oder eine Einmündung von Straßen. Das heißt also, dass ein Straßenknotenpunkt eine Straßenkreuzung sein kann. Ein Straßenknotenpunkt ist beispielsweise ein Bahnübergang, ein Autobahnkreuz, ein Autobahndreieck, ein Kreisverkehr, eine Autobahnauffahrt oder eine Autobahnabfahrt.

In einer Ausführungsform ist vorgesehen, dass eine Bewegung des Kraftfahrzeugs prädiziert wird, um die voraussichtliche Ankunftszeit zu ermitteln.

Dadurch wird zum Beispiel der technische Vorteil bewirkt, dass die voraussichtliche Ankunftszeit effizient ermittelt werden kann.

Nach einer weiteren Ausführungsform ist vorgesehen, dass Kinematiksignale empfangen werden, die eine oder mehrere kinematische Größen des Kraftfahrzeugs repräsentieren, wobei das Prädizieren basierend auf den Kinematiksignalen durchgeführt wird.

Dadurch wird zum Beispiel der technische Vorteil bewirkt, dass das Prädizieren effizient durchgeführt werden kann.

Eine kinematische Größe im Sinne der Beschreibung ist beispielsweise eine der folgenden klimatischen Größen: Ort beziehungsweise Position des Kraftfahrzeugs, Geschwindigkeit des Kraftfahrzeugs und Beschleunigung des Kraftfahrzeugs.

Gemäß einer Ausführungsform ist vorgesehen, dass historische Verkehrszustandssignale empfangen werden, die einen historischen Verkehrszustand des zweiten Bereichs zu einer der voraussichtlichen Ankunftszeit entsprechenden Uhrzeit repräsentieren, wobei das Ermitteln, ob der zweite Bereich zu der voraussichtlichen Ankunftszeit des Kraftfahrzeugs am zweiten Bereich frei von einem möglichen Kollisionsobjekt für das Kraftfahrzeug ist, basierend auf den historischen Verkehrszustandssignalen durchgeführt wird.

Dadurch wird zum Beispiel der technische Vorteil bewirkt, dass das Ermitteln effizient durchgeführt werden kann.

Das Verwenden von historischen Verkehrszustandssignalen weist weiter den technischen Vorteil auf, dass beispielsweise eine Analyse der Bereichssignale effizient durchgeführt werden kann. Wenn beispielsweise basierend auf den Bereichssignalen ein mögliches Kollisionsobjekt detektiert wurde, kann dieses unter Verwendung der historischen Verkehrszustandssignale beispielsweise plausibilisiert werden. Denn wenn beispielsweise in der Vergangenheit bereits zu dieser Uhrzeit eine Vielzahl von Kraftfahrzeugen innerhalb des Bereichs fuhren, wird das aktuell detektierte mögliche Kollisionsobjekt mit einer sehr hohen Wahrscheinlichkeit real sein.

Das Ermitteln, ob der zweite Bereich zu der voraussichtlichen Ankunftszeit des Kraftfahrzeugs am Bereich frei von einem möglichen Kollisionsobjekt für das Kraftfahrzeug ist, umfasst ein Verarbeiten der Bereichssignale, um ein mögliches Kollisionsobjekt zu detektieren, wobei bei Detektion eines möglichen Kollisionsobjekts eine Bewegung des detektierten möglichen Kollisionsobjekts basierend auf den Bereichssignalen prädiziert wird, um zu ermitteln, ob sich das detektierte mögliche Kollisionsobjekt zu der voraussichtlichen Ankunftszeit noch innerhalb des zweiten Bereichs befinden wird.

Dadurch wird zum Beispiel der technische Vorteil bewirkt, dass das Ermitteln effizient durchgeführt werden kann.

Gemäß einer weiteren Ausführungsform ist vorgesehen, dass wenn sich das detektierte mögliche Kollisionsobjekt zu der voraussichtlichen Ankunftszeit noch innerhalb des zweiten Bereichs befinden wird, basierend auf der Prädiktion des detektierten möglichen Kollisionsobjekts ermittelt wird, zu welcher Zeit das detektierte mögliche Kollisionsobjekt den zweiten Bereich verlassen wird, wobei basierend auf der ermittelten Zeit Fahrverhaltenssignale erzeugt und ausgegeben werden, welche ein Soll-Fahrverhalten des Kraftfahrzeugs repräsentieren, basierend auf welchem das Kraftfahrzeug zu der ermittelten Zeit am ersten oder zweiten Bereich voraussichtlich ankommen wird.

Dadurch wird zum Beispiel der technische Vorteil bewirkt, dass das Kraftfahrzeug effizient bei seiner zumindest teilautomatisiert geführten Fahrt unterstützt werden kann. Wenn also das Kraftfahrzeug dem Soll-Fahrverhalten folgt, wird es zu der ermittelten Zeit voraussichtlich am ersten beziehungsweise zweiten Bereich ankommen. Dann aber ist voraussichtlich der erste beziehungsweise zweite Bereich wieder frei von dem detektierten möglichen Kollisionsobjekt, sodass eine kollisionsfreie Fahrt des Kraftfahrzeugs innerhalb des Bereichs möglich ist.

In einer anderen Ausführungsform ist vorgesehen, dass der zweite Bereich ein Teilbereich des ersten Bereichs ist und basierend auf einer voraussichtlichen Trajektorie des Kraftfahrzeugs derart festgelegt wird, dass die voraussichtliche Trajektorie durch den ersten Bereich führt.

Dadurch wird zum Beispiel der technische Vorteil bewirkt, dass das Ermitteln effizient durchgeführt werden kann.

Das heißt also, dass hier nur ein Teilbereich des ersten Bereichs betrachtet wird, was eine effiziente und schnelle Analyse der Bereichssignale erlaubt.

Eine Umfeldsensorik im Sinne der Beschreibung umfasst zum Beispiel einen oder mehrere Umfeldsensoren.

Umfeldsensoren im Sinne der Beschreibung sind beispielsweise räumlich innerhalb der Verkehrsinfrastuktur verteilt angeordnet.

Umfeldsensoren im Sinne der Beschreibung sind beispielsweise von einem anderen oder anderen Kraftfahrzeug umfasst, die verschieden von dem sich dem Bereich nähernden Kraftfahrzeug sind. Beispielsweise handelt es sich bei diesen weiteren Kraftfahrzeugen um Kraftfahrzeuge, die um oder innerhalb des Bereichs beziehungsweise benachbart zum Bereich abgestellt, beispielsweise geparkt, sind. Umfeldsensoren im Sinne der Beschreibung sind beispielsweise stationär angeordnet.

Umfeldsensoren im Sinne der Beschreibung sind beispielsweise mobile Umfeldsensoren. Beispielsweise ist ein Umfeldsensor an einem umbenannten Luftfahrzeug, beispielsweise einer Drohne, angeordnet.

Ein Umfeldsensor im Sinne der Beschreibung ist beispielsweise einer der folgenden Umfeldsensoren: Videosensor, beispielsweise Videosensor einer Videokamera, Radarsensor, LiDAR-Sensor, Ultraschallsensor, Magnetfeldsensor, Drucksensor, und Infrarotsensor.

Stationär angeordnete Umfeldsensoren sind beispielsweise an einem oder mehreren Verkehrsinfrastukturelementen der Verkehrsinfrastuktur angeordnet.

Ein Verkehrsinfrastukturelement im Sinne der Beschreibung ist beispielsweise eines der folgenden Verkehrsinfrastukturelemente: Laternenpfahl, Straßenschild, Pfeiler, Gebäude, Brücke, Verkehrszeichenschild, Pfahl, Mast, beispielsweise Strommast, Lichtsignalanlage.

Ein Umfeldsensor im Sinne der Beschreibung ist beispielsweise versenkt in einer Straße angeordnet.

Technische Funktionalitäten der Vorrichtung gemäß dem zweiten Aspekt ergeben sich analog aus entsprechenden technischen Funktionalitäten aus dem Verfahren gemäß dem ersten Aspekt und umgekehrt.

Das heißt also insbesondere, dass sich Vorrichtungsmerkmale aus entsprechenden Verfahrensmerkmalen und umgekehrt ergeben.

Nach einer Ausführungsform ist vorgesehen, dass das Verfahren gemäß dem ersten Aspekt mittels der Vorrichtung gemäß dem zweiten Aspekt ausgeführt wird.

Sofern der Begriff "Umfeldsensor" im Singular steht, soll stets der Plural mitgelesen werden und umgekehrt.

Sofern beispielsweise der Begriff "Kollisionsobjekt" im Singular steht, soll stets der Plural mitgelesen werden und umgekehrt.

Die Abkürzung "bzw." steht für "beziehungsweise" und umfasst zum Beispiel die Formulierung "respektive".

Die Formulierung "respektive" umfasst insbesondere die Formulierung "und/oder".

Ausführungsbeispiele der Erfindung sind in den Zeichnungen dargestellt und in der nachfolgenden Beschreibung näher erläutert.

Es zeigen:
- Figur 1: ein Ablaufdiagramm eines Verfahrens zum Assistieren eines Kraftfahrzeugs,
- Figur 2: eine Vorrichtung,
- Figur 3: ein maschinenlesbares Speichermedium,
- Figur 4: ein Kraftfahrzeug, welches sich einer Kreuzung nähert,
- Figur 5: die Kreuzung der Figur 4 mit dem sich nähernden Kraftfahrzeug und
- Figur 6: ein Umfeldmodell der Kreuzung der Figur 4 beziehungsweise 5.

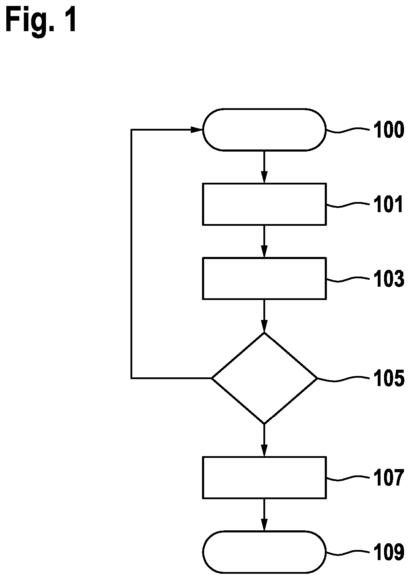

Figur 1 zeigt ein Ablaufdiagramm eines Verfahrens zum Assistieren eines Kraftfahrzeugs bei einer zumindest teilautomatisiert geführten Fahrt des Kraftfahrzeugs innerhalb einer Verkehrsinfrastuktur.

Das Verfahren startet im Block 100.

Gemäß einem Schritt 101 ist ein Empfangen von Bereichssignalen vorgesehen, die einen mittels einer Umfeldsensorik erfassten ersten Bereich der Verkehrsinfrastuktur repräsentieren.

Das heißt also, dass die Bereichssignale beispielsweise Umfeldsensorsignale von dem einen oder den mehreren Umfeldsensoren der Umfeldsensorik umfassen.

In einem Schritt 103 ist ein Ermitteln für ein sich dem ersten Bereich zumindest teilautomatisiert näherndes Kraftfahrzeug vorgesehen, ob ein zweiter Bereich, der ein Teilbereich des ersten Bereichs oder der erste Bereich ist, zu einer voraussichtlichen Ankunftszeit des Kraftfahrzeugs am ersten oder zweiten Bereich frei von einem möglichen Kollisionsobjekt für das Kraftfahrzeug ist, basierend auf den Bereichssignalen.

In einem Schritt 105 ist eine Prüfung eines Ergebnisses des Ermittelns dahingehend vorgesehen, ob das Ergebnis vorgibt, ob der zweite Bereich frei von einem möglichen Kollisionsobjekt oder nicht ist.

Sofern das Ergebnis vorgibt, dass der zweite Bereich nicht frei von einem möglichen Kollisionsobjekt für das Kraftfahrzeug ist, wird das Verfahren an dieser Stelle abgebrochen und beginnt beispielsweise wieder am Block 100.

Sofern das Ergebnis vorgibt, dass der zweite Bereich frei von einem möglichen Kollisionsobjekt für das Kraftfahrzeug zur voraussichtlichen Ankunftszeit des Kraftfahrzeugs ist, ist gemäß einem Schritt 107 vorgesehen, dass ein Freigabesignal zum Senden einer Kommunikationsnachricht über ein Kommunikationsnetzwerk an das Kraftfahrzeug ausgegeben wird, dass der zweite Bereich zu der voraussichtlichen Ankunftszeit frei von einem möglichen Kollisionsobjekt für das Kraftfahrzeug ist.

Beispielsweise ist vorgesehen, dass das Freigabesignal an eine Kommunikationsschnittstelle ausgegeben wird, die ansprechend auf das Freigabesignal die Kommunikationsnachricht über das Kommunikationsnetzwerk an das Kraftfahrzeug sendet.

In einer Ausführungsform ist der Schritt des Sendens der Kommunikationsnachricht von dem Verfahren umfasst.

Ein Kommunikationsnetzwerk im Sinne der Beschreibung umfasst beispielsweise ein Mobilfunknetz und/oder ein WLAN-Kommunikationsnetzwerk.

Das Verfahren endet dann im Block 109.

Das sich dem ersten Bereich der Verkehrsinfrastuktur zumindest teilautomatisiert geführt nähernde Kraftfahrzeug empfängt die Kommunikationsnachricht und kann dann effizient seine Fahrt durch den ersten Bereich planen beziehungsweise durchführen.

Sofern der zweite Bereich nicht frei von einem möglichen Kollisionsobjekt zur voraussichtlichen Ankunftszeit ist, wird das Kraftfahrzeug keine entsprechende Kommunikationsnachricht empfangen, insofern eine solche auch nicht gesendet wird.

In diesem Fall kann dann das zumindest teilautomatisiert geführte Kraftfahrzeug seine Fahrt verlangsamen beziehungsweise sogar ganz anhalten. Dadurch kann ein Kollisionsrisiko mit dem möglichen Kollisionsobjekt effizient verringert werden.

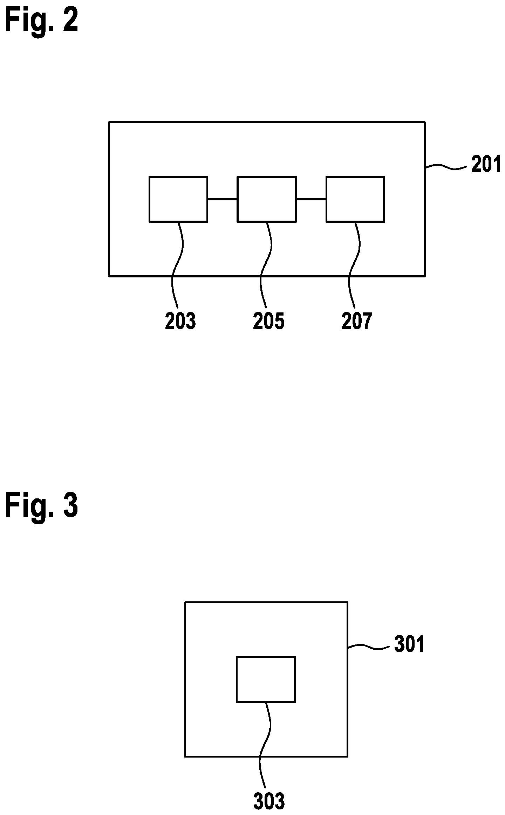

Figur 2 zeigt eine Vorrichtung 201.

Die Vorrichtung 201 ist eingerichtet, alle Schritte des Verfahrens gemäß dem ersten Aspekt auszuführen.

Die Vorrichtung 201 umfasst einen Eingang 203, der eingerichtet ist, die vorstehend beschriebenen Bereichssignale zu empfangen.

Die Vorrichtung 201 umfasst einen Prozessor 205, der eingerichtet ist, den vorstehend beschriebenen Schritt des Ermittelns auszuführen.

Die Vorrichtung 201 umfasst einen Ausgang 207, der eingerichtet ist, den vorstehend beschriebenen Schritt des Ausgebens des Freigabesignals auszuführen.

In einer Ausführungsform ist eine Kommunikationsschnittstelle vorgesehen, die beispielsweise von der Vorrichtung 201 umfasst sein kann, wobei die Kommunikationsschnittstelle eingerichtet ist, das Freigabesignal von dem Prozessor 205 zu empfangen. Die Kommunikationsschnittstelle ist beispielsweise eingerichtet, ansprechend auf den Empfang des Freigabesignals die Kommunikationsnachricht über ein Kommunikationsnetzwerk an das Kraftfahrzeug zu senden.

In einer Ausführungsform sind anstelle des einen Prozessors 205 mehrere Prozessoren vorgesehen.

Figur 3 zeigt ein maschinenlesbares Speichermedium 301.

Auf dem maschinenlesbaren Speichermedium 301 ist ein Computerprogramm gemäß dem dritten Aspekt gespeichert.

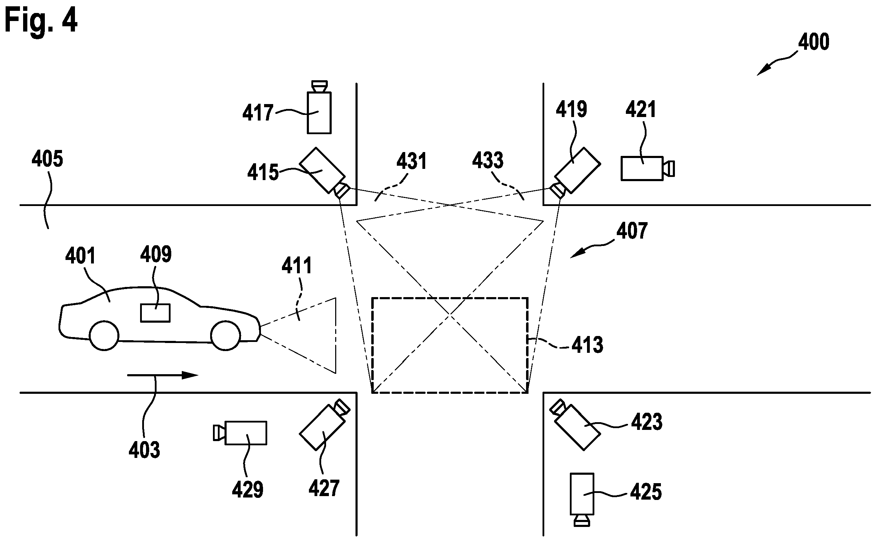

Figur 4 zeigt ein Kraftfahrzeug 401, welches zumindest teilautomatisiert geführt wird.

Eine Fahrtrichtung des Kraftfahrzeugs 401 ist symbolisch mit einem Pfeil mit dem Bezugszeichen 403 dargestellt.

Das Kraftfahrzeug 401 fährt in Fahrtrichtung 403 auf einer Straße 405 in Richtung einer Kreuzung 407, die Teil einer Verkehrsinfrastuktur 400 ist.

Das Kraftfahrzeug 401 umfasst einen Videosensor 409. Ein Erfassungsbereich des Videosensors 409 ist mit dem Bezugszeichen 411 dargestellt.

Der Erfassungsbereich 411 des Videosensors 409 ist dabei dergestalt, dass nicht der gesamte Kreuzungsbereich erfasst werden kann, sofern sich das Kraftfahrzeug 401 noch in einer bestimmten Distanz zum Kreuzungsbereich befindet. Das heißt also, dass dem Kraftfahrzeug 401 bei seiner Annäherung an die Kreuzung 407 Informationen darüber fehlen, ob die Kreuzung 407 frei oder belegt ist.

Ein für die zumindest teilautomatisiert geführte Fahrt des Kraftfahrzeugs 401 relevanter Bereich ist symbolisch mittels eines gestrichelten Vierecks mit dem Bezugszeichen 413 dargestellt. Dieser Bereich 413 befindet sich im Kreuzungsbereich und liegt auf einer voraussichtlichen Trajektorie des Kraftfahrzeugs 401.

Da das Kraftfahrzeug 401 mittels seines eigenen Umfeldsensors, dem Videosensor 409, diesen Bereich 413 nicht erfassen kann, ist es auf externe Informationen diesbezüglich angewiesen.

Das hier beschriebene Konzept beruht nun darauf, dass externe Umfeldsensoren diese Aufgabe übernehmen.

Gemäß Figur 4 sind im Kreuzungsbereich mehrere Videokameras umfassend jeweils einen Videosensor vorgesehen, die eine Umgebung des Kreuzungsbereichs beziehungsweise die Kreuzung 407 erfassen können. Die mehreren Videokameras sind Teil einer Umfeldsensorik.

Im Einzelnen sind eine erste Videokamera 415, eine zweite Videokamera 417, eine dritte Videokamera 419, eine vierte Videokamera 421, eine fünfte Videokamera 423, eine sechste Videokamera 425, eine siebte Videokamera 427 und eine achte Videokamera 429 vorgesehen.

An dieser Stelle wird angemerkt, dass die hier gezeigte Anzahl von Videokameras lediglich beispielhaft zu verstehen ist.

Beispielhaft sind für die erste Videokamera 415 und die dritte Videokamera 419 Erfassungsbereiche eingezeichnet. Ein Erfassungsbereich der ersten Videokamera 415 ist mit dem Bezugszeichen 431 gekennzeichnet. Ein Erfassungsbereich der dritten Videokamera 419 ist mit dem Bezugszeichen 433 gekennzeichnet.

Die beiden Erfassungsbereiche 431, 433 überlappen sich im Kreuzungsbereich.

Es ist vorgesehen, dass die erste, dritte, fünfte, siebte Videokamera 415, 419, 423, 427 in Richtung Kreuzungsmitte ausgerichtet sind, sodass diese Videokameras den Kreuzungsbereich erfassen können.

Es ist vorgesehen, dass die zweite Videokamera, vierte Videokamera, sechste Videokamera, achte Videokamera 417, 421, 425, 429 einen bezogen auf die Kreuzung 407 zurückliegenden beziehungsweise abgewandten Straßenabschnitt einer auf die Kreuzung 407 zulaufenden Straße erfassen.

Das heißt also, dass die achte Videokamera 429 rückwärtig bezogen auf die Fahrtrichtung 403 des Kraftfahrzeugs 401 die Straße 405 erfasst.

Somit stellen diese Videokameras in vorteilhafter Weise Bereichssignale, hier Videosignale, zur Verfügung, die eine Umgebung der Kreuzung 407 beziehungsweise den Kreuzungsbereich selbst repräsentieren.

Beispielsweise erfasst die achte Videokamera 429 das Kraftfahrzeug 401 bei seiner Annäherung an die Kreuzung 407. Basierend auf dieser Erfassung kann beispielsweise eine Bewegung des Kraftfahrzeugs 401 prädiziert werden, wobei basierend auf dieser Prädiktion eine voraussichtliche Ankunftszeit des Kraftfahrzeugs 401 an der Kreuzung 407 ermittelt werden kann.

Die Kreuzung 407 legt insbesondere einen ersten Bereich im Sinne der Beschreibung fest.

Basierend auf den Videosignalen der in Richtung Kreuzungsmitte ausgerichteten Videokameras wird ermittelt, ob sich mögliche Kollisionsobjekte innerhalb der Kreuzung 407 befinden zur voraussichtlichen Ankunftszeit des Kraftfahrzeugs 401 an der Kreuzung 407.

Sofern das Ermitteln ergeben hat, dass die Kreuzung 407 frei von solch möglichen Kollisionsobjekten ist, wird eine Kommunikationsnachricht an das Kraftfahrzeug 401 über ein Kommunikationsnetzwerk gesendet, dass die Kreuzung 407 frei von möglichen Kollisionsobjekten ist.

Sofern ein mögliches Kollisionsobjekt detektiert wurde, wird keine solche Kommunikationsnachricht an das Kraftfahrzeug 401 gesendet. Das Ausbleiben einer solchen Kommunikationsnachricht ist für das Kraftfahrzeug 401 dann das Signal, beispielsweise seine Geschwindigkeit zu verringern beziehungsweise sogar ganz anzuhalten beziehungsweise eine Warnung an einen Fahrer des Kraftfahrzeugs 401 auszugeben, sodass dieser wieder vollständig die Kontrolle über das Kraftfahrzeug 401 übernehmen muss.

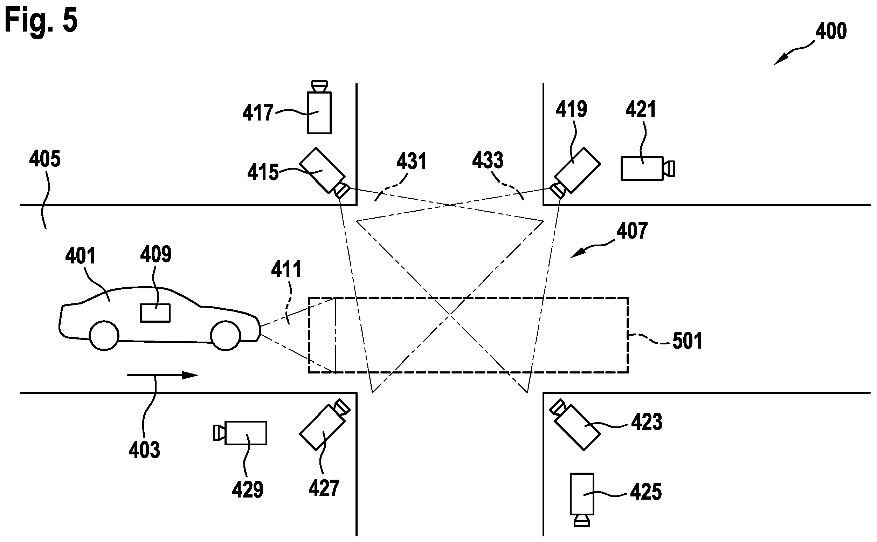

Figur 5 zeigt die Kreuzung 407 gemäß Figur 4.

Als Ergänzung ist hier ein zweiter Bereich 501 eingezeichnet, der ein Teilbereich der Kreuzung 407 ist.

Der zweite Bereich 501 liegt innerhalb einer Fahrspur, auf welcher das Kraftfahrzeug 401 die Kreuzung 407 passieren wird. Relevant ist also gemäß dieser Ausführungsform nur der zweite Bereich 501, also der Teilbereich, und nicht mehr der gesamte Kreuzungsbereich.

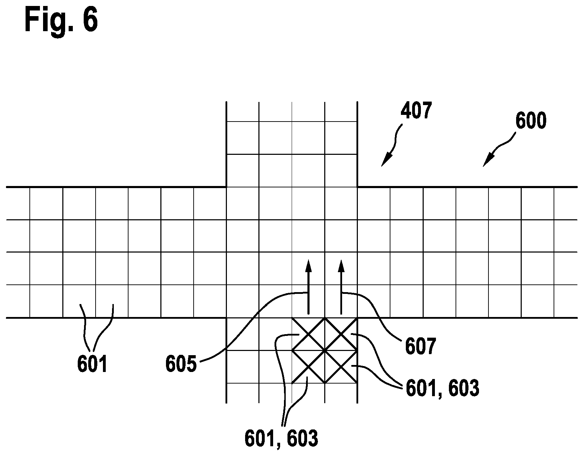

Figur 6 zeigt ein Umfeldmodell 600 der Kreuzung 407.

Das Umfeldmodell 600 sieht vor, die Kreuzung 407 in mehrere Kacheln 601 zu unterteilen und für jede Kachel 601 zu ermitteln, ob die Kachel durch ein Kollisionsobjekt belegt ist oder nicht. Belegte Kacheln sind beispielhaft mit dem Bezugszeichen 603 zusätzlich zum Bezugszeichen 601 gekennzeichnet.

Für ein solch mögliches Kollisionsobjekt wird gemäß einer Ausführungsform eine jeweilige Trajektorie 605, 607 ermittelt, um hierüber eine Aussage zu treffen, ob das Kollisionsobjekt zur voraussichtlichen Ankunftszeit des Kraftfahrzeugs 401, welches in Figur 6 der Übersicht halber nicht eingezeichnet ist, sich kreuzungsmittig befinden wird.

Der Übersicht halber sind auch die Videokameras in Figur 6 nicht gezeichnet.

Zusammenfassend basiert das hier beschriebene Konzept auf einer Überwachung eines Bereichs, beispielsweise einer Straßenkreuzung, einer Verkehrsinfrastuktur. Basierend auf der Überwachung wird ermittelt, ob der Bereich zu einer voraussichtlichen Ankunftszeit eines sich dem Bereich nähernden Kraftfahrzeugs frei von einem möglichen Kollisionsobjekt ist. Wenn kein mögliches Kollisionsobjekt zur voraussichtlichen Ankunftszeit sich im Kreuzungsbereich befindet, wird dies dem Kraftfahrzeug über eine Kommunikationsnachricht mitgeteilt. Das Kraftfahrzeug kann dann im Folgenden seine eigenen Fahraktionen entsprechend planen.

In einer Ausführungsform ist vorgesehen, dass nur ein Teilbereich des Bereichs analysiert und ein Ergebnis der Analyse an das Kraftfahrzeug übergeben wird. Der Teilbereich wird beispielsweise basierend auf der voraussichtlichen Trajektorie des Kraftfahrzeugs festgelegt. Beispielsweise liegt eine Fahrspur, auf welcher das Kraftfahrzeug den ersten Bereich passieren wird, in dem zweiten Bereich.

Der erste bzw. Zweite Bereich kann beispielsweise in Kacheln unterteilt werden. Für jede Kachel wird einzeln geprüft, ob die Kachel belegt oder frei ist. Belegte Kacheln werden weiter dahingehend beispielsweise analysiert, indem die jeweilige Bewegung der den belegten Kacheln entsprechenden Objekte prädiziert wird.

In einer Ausführungsform werden klassische Bildverarbeitungsmethoden verwendet, um basierend auf den Bereichssignalen Objekte zu detektieren.

In einer Ausführungsform ist vorgesehen, dass zur Detektion eines Objekts im ersten bzw. Zweiten Bereich der Bereich, der durch die Bereichssignale repräsentiert wird, mit einem Referenzbereich verglichen wird, um Änderungen ermitteln zu können.

In einer Ausführungsform werden detektierte Objekte klassifiziert. Eine Klassifikation ist beispielsweise eine Klassifikation dahingehend, ob das detektierte Objekt eine Person, ein weiteres Kraftfahrzeug oder beispielsweise ein Fahrrad ist.

Die Klassifikation wird gemäß einer Ausführungsform an das sich dem Bereich nähernde Kraftfahrzeug über das Kommunikationsnetzwerk gesendet. Dadurch kann das Kraftfahrzeug effizient seine weitere Fahrt planen.

In einer Ausführungsform werden Fahrempfehlungen (das vorstehend beschriebene Soll-Fahrverhalten) für das sich dem Bereich nähernde Kraftfahrzeug ermittelt und an das Kraftfahrzeug über das Kommunikationsnetzwerk gesendet. Eine Fahrempfehlung ist beispielsweise ein Verringern einer Geschwindigkeit beziehungsweise ein Notstopp.

## Patentansprüche

1. Verfahren zum Assistieren eines Kraftfahrzeugs (401) bei einer zumindest teilautomatisiert geführten Fahrt des Kraftfahrzeugs (401) innerhalb einer Verkehrsinfrastruktur (400), umfassend die folgenden Schritte:
- Empfangen (101) von Bereichssignalen, die einen mittels einer Umfeldsensorik (415, 419, 423, 427) erfassten ersten Bereich (407) der Verkehrsinfrastruktur (400) repräsentieren, wobei die Umfeldsensorik stationär angeordnete Umfeldsensoren umfasst.
- Ermitteln (103) für ein sich dem ersten Bereich (407) zumindest teilautomatisiert geführt näherndes Kraftfahrzeug (401), ob ein zweiter Bereich (501), der ein Teilbereich des ersten Bereichs (407) ist, zu einer voraussichtlichen Ankunftszeit des Kraftfahrzeugs (401) am zweiten Bereich (407, 501) frei von einem möglichen Kollisionsobjekt für das Kraftfahrzeug (401) ist, basierend auf den Bereichssignalen,
- bei einem zu der voraussichtlichen Ankunftszeit von einem möglichen Kollisionsobjekt für das Kraftfahrzeug (401) freien zweiten Bereich (501) Ausgeben (107) eines Freigabesignals zum Senden einer Kommunikationsnachricht über ein Kommunikationsnetzwerk an das Kraftfahrzeug (401), dass der zweite Bereich (501) zu der voraussichtlichen Ankunftszeit frei von einem möglichen Kollisionsobjekt für das Kraftfahrzeug (401) ist, wobei das Ausbleiben einer solchen Kommunikationsnachricht für das Kraftfahrzeug (401) das Signal ist, seine Geschwindigkeit zu verringern oder ganz anzuhalten oder eine Warnung an einen Fahrer des Kraftfahrzeugs (401) auszugeben, sodass dieser wieder vollständig die Kontrolle über das Kraftfahrzeug (401) übernehmen muss,
- wobei das Ermitteln, ob der zweite Bereich (501) zu der voraussichtlichen Ankunftszeit des Kraftfahrzeugs (401) am Bereich frei von einem möglichen Kollisionsobjekt für das Kraftfahrzeug (401) ist, ein Verarbeiten der Bereichssignale umfasst, um ein mögliches Kollisionsobjekt zu detektieren, wobei bei Detektion eines möglichen Kollisionsobjekts eine Bewegung des detektierten möglichen Kollisionsobjekts basierend auf den Bereichssignalen prädiziert wird, um zu ermitteln, ob sich das detektierte mögliche Kollisionsobjekt zu der voraussichtlichen Ankunftszeit noch innerhalb des zweiten Bereichs (501) befinden wird.

2. Verfahren nach Anspruch 1, wobei eine Bewegung des Kraftfahrzeugs (401) prädiziert wird, um die voraussichtliche Ankunftszeit zu ermitteln.

3. Verfahren nach Anspruch 2, wobei Kinematiksignale empfangen werden, die eine oder mehrere kinematische Größen des Kraftfahrzeugs (401) repräsentieren, wobei das Prädizieren basierend auf den Kinematiksignalen durchgeführt wird.

4. Verfahren nach einem der vorherigen Ansprüche, wobei historische Verkehrszustandssignale empfangen werden, die einen historischen Verkehrszustand des zweiten Bereichs (501) zu einer der voraussichtlichen Ankunftszeit entsprechenden Uhrzeit repräsentieren, wobei das Ermitteln, ob der zweite Bereich (501) zu der voraussichtlichen Ankunftszeit des Kraftfahrzeugs (401) am zweiten Bereich (501) frei von einem möglichen Kollisionsobjekt für das Kraftfahrzeug (401) ist, basierend auf den historischen Verkehrszustandssignalen durchgeführt wird.

5. Verfahren nach Anspruch 1, wobei, wenn sich das detektierte mögliche Kollisionsobjekt zu der voraussichtlichen Ankunftszeit noch innerhalb des zweiten Bereichs (501) befinden wird, basierend auf der Prädiktion des detektierten möglichen Kollisionsobjekts ermittelt wird, zu welcher Zeit das detektierte mögliche Kollisionsobjekt den zweiten Bereich (501) verlassen wird, wobei basierend auf der ermittelten Zeit Fahrverhaltenssignale erzeugt und ausgegeben werden, welche ein Soll-Fahrverhalten des Kraftfahrzeugs (401) repräsentieren, basierend auf welchem das Kraftfahrzeug (401) zu der ermittelten Zeit am ersten oder zweiten Bereich (407, 501) voraussichtlich ankommen wird.

6. Verfahren nach einem der vorherigen Ansprüche, wobei der zweite Bereich (501) basierend auf einer voraussichtlichen Trajektorie des Kraftfahrzeugs (401) derart festgelegt wird, dass die voraussichtliche Trajektorie durch den ersten Bereich (407) führt.

7. Vorrichtung (201), die eingerichtet ist, alle Schritte des Verfahrens nach einem der vorherigen Ansprüche auszuführen.

8. Computerprogramm (303), umfassend Befehle, die bei Ausführung des Computerprogramms (303) durch einen Computer diesen veranlassen, ein Verfahren gemäß einem der Ansprüche 1 bis 6 auszuführen.

9. Maschinenlesbares Speichermedium, auf dem das Computerprogramm nach Anspruch 8 gespeichert ist.

## Claims

1. Method for assisting a motor vehicle (401) during a journey of the motor vehicle (401) with at least partially automated guidance within a traffic infrastructure (400), comprising the following steps:
- receiving (101) region signals which represent a first region (407) of the traffic infrastructure (400) captured by means of an environment sensor system (415, 419, 423, 427), wherein the environment sensor system comprises environment sensors arranged in a stationary manner,
- ascertaining (103), for a motor vehicle (401) approaching the first region (407) with at least partially automated guidance, whether a second region (501), which is a partial region of the first region (407), is free of a possible collision object for the motor vehicle (401) at an expected arrival time of the motor vehicle (401) at the second region (407, 501), based on the region signals,
- in the case of a second region (501) free of a possible collision object for the motor vehicle (401) at the expected arrival time, outputting (107) an enable signal for sending a communication message to the motor vehicle (401) via a communication network indicating that the second region (501) is free of a possible collision object for the motor vehicle (401) at the expected arrival time, wherein the absence of such a communication message for the motor vehicle (401) is the signal to reduce its speed or to stop completely or to output a warning to a driver of the motor vehicle (401), such that the latter must again take over complete control of the motor vehicle (401),
- wherein the ascertainment of whether the second region (501) is free of a possible collision object for the motor vehicle (401) at the expected arrival time of the motor vehicle (401) at the region comprises processing the region signals in order to detect a possible collision object, wherein, when a possible collision object is detected, a movement of the detected possible collision object is predicted on the basis of the region signals in order to ascertain whether the detected possible collision object will still be located within the second region (501) at the expected arrival time.

2. Method according to Claim 1, wherein a movement of the motor vehicle (401) is predicted in order to ascertain the expected arrival time.

3. Method according to Claim 2, wherein kinematic signals representing one or more kinematic variables of the motor vehicle (401) are received, wherein the prediction is carried out on the basis of the kinematic signals.

4. Method according to one of the preceding claims, wherein historical traffic state signals representing a historical traffic state of the second region (501) at a time corresponding to the expected arrival time are received, wherein the ascertainment of whether the second region (501) is free of a possible collision object for the motor vehicle (401) at the expected arrival time of the motor vehicle (401) at the second region (501) is carried out on the basis of the historical traffic state signals.

5. Method according to Claim 1, wherein, if the detected possible collision object will still be located within the second region (501) at the expected arrival time, the time at which the detected possible collision object will leave the second region (501) is ascertained on the basis of the prediction of the detected possible collision object, wherein driving behaviour signals representing a target driving behaviour of the motor vehicle (401), on the basis of which the motor vehicle (401) is expected to arrive at the first or second region (407, 501) at the determined time, are generated and output on the basis of the ascertained time.

6. Method according to one of the preceding claims, wherein the second region (501) is defined on the basis of an expected trajectory of the motor vehicle (401) in such a way that the expected trajectory leads through the first region (407).

7. Device (201) configured to perform all the steps of the method according to one of the preceding claims.

8. Computer program (303) comprising instructions which, when the computer program (303) is executed by a computer, cause the latter to perform a method according to one of Claims 1 to 6.

9. Machine-readable storage medium on which the computer program according to Claim 8 is stored.

## Revendications

1. Procédé d'assistance d'un véhicule à moteur (401) lors d'un trajet à pilotage au moins en partie automatisé du véhicule à moteur (401) au sein d'une infrastructure de circulation (400), comprenant les étapes suivantes consistant à :
- recevoir (101) des signaux de zone, qui représentent une première zone (407) de l'infrastructure de circulation (400) détectée au moyen d'un équipement de détection d'environnement (415, 419, 423, 427), l'équipement de détection d'environnement comprenant des capteurs d'environnement disposés de manière stationnaire,
- déterminer (103), pour un véhicule à moteur (401) se rapprochant par un pilotage au moins en partie automatisé de la première zone (407), si une deuxième zone (501), qui est une zone partielle de la première zone (407), est sans objet de collision éventuel pour le véhicule à moteur (401) à un moment d'arrivée prévisible du véhicule à moteur (401) sur la deuxième zone (407, 501), sur la base des signaux de zone,
- pour une deuxième zone (501) sans objet de collision éventuel pour le véhicule à moteur (401) au moment d'arrivée prévisible, émettre (107) un signal de validation pour envoyer un message de communication par l'intermédiaire d'un réseau de communication au véhicule à moteur (401), indiquant que la deuxième zone (501) est sans objet de collision éventuel pour le véhicule à moteur (401) au moment d'arrivée prévisible, l'absence d'un tel message de communication pour le véhicule à moteur (401) étant le signal pour réduire sa vitesse ou s'arrêter complètement ou pour émettre un avertissement à destination d'un conducteur du véhicule à moteur (401) de telle sorte que ce dernier doive à nouveau reprendre entièrement le contrôle du véhicule à moteur (401),
- la détermination du fait de savoir si la deuxième zone (501) est sans objet de collision éventuel pour le véhicule à moteur (401) au moment d'arrivée prévisible du véhicule à moteur (401) sur la zone comprenant un traitement des signaux de zone afin de détecter un objet de collision éventuel, un mouvement de l'objet de collision éventuel détecté étant prédit, en cas de détection d'un tel objet, sur la base des signaux de zone afin de déterminer si l'objet de collision éventuel détecté se trouvera encore au sein de la deuxième zone (501) au moment d'arrivée prévisible.

2. Procédé selon la revendication 1, dans lequel un mouvement du véhicule à moteur (401) est prédit afin de déterminer le moment d'arrivée prévisible.

3. Procédé selon la revendication 2, dans lequel des signaux cinématiques sont reçus, lesquels représentent une ou plusieurs grandeurs cinématiques du véhicule à moteur (401), la prédiction étant effectuée sur la base des signaux cinématiques.

4. Procédé selon l'une des revendications précédentes, dans lequel des signaux d'état de circulation historiques sont reçus, lesquels représentent un état de circulation historique de la deuxième zone (501) à un moment correspondant au moment d'arrivée prévisible, dans lequel la détermination du fait de savoir si la deuxième zone (501) est sans objet de collision éventuel pour le véhicule à moteur (401) au moment d'arrivée prévisible du véhicule à moteur (401) sur la deuxième zone (501) est effectuée sur la base des signaux d'état de circulation historiques.

5. Procédé selon la revendication 1, dans lequel, si l'objet de collision éventuel détecté se trouvera encore au sein de la deuxième zone (501) au moment d'arrivée prévisible, **il** est déterminé, sur la base de la prédiction de l'objet de collision éventuel détecté, à quel moment l'objet de collision éventuel détecté quittera la deuxième zone (501), des signaux de comportement de conduite étant générés et émis sur la base du moment déterminé, lesquels représentent un comportement de conduite de consigne du véhicule à moteur (401) sur la base duquel le véhicule à moteur (401) arrivera vraisemblablement à la première ou à la deuxième zone (407, 501) au moment déterminé.

6. Procédé selon l'une des revendications précédentes, dans lequel la deuxième zone (501) est définie sur la base d'une trajectoire prévisible du véhicule à moteur (401) de telle sorte que la trajectoire prévisible passe par la première zone (407).

7. Dispositif (201), conçu pour exécuter toutes les étapes du procédé selon l'une des revendications précédentes.

8. Programme informatique (303), comprenant des instructions qui, lorsque le programme informatique (303) est exécuté par un ordinateur, amènent celui-ci à mettre en œuvre un procédé selon la revendication 1 à 6.

9. Support de stockage lisible par machine, sur lequel est stocké le programme informatique selon la revendication 8.
